# EUROPÄISCHE PATENTANMELDUNG

(11) **EP 2 261 195 A2**
(43) Veröffentlichungstag der Anmeldung: **15.12.2010**
(21) Anmeldenummer: 10005892.4
(22) Anmeldetag: 08.06.2010
(51) Int. Cl.: C05F 17/02

(54) **Verfahren und Anlage zum Kompostieren organischen Materials**

(30) Priorität: 12.06.2009 DE 102009024671
(71) Anmelder: BACKHUS GmbH, 26188 Edewecht (DE)
(72) Erfinder: Hahn, Björn, 26197 Großenkneten (DE)
(74) Vertreter: Jabbusch, Matthias

(57) **Zusammenfassung**

Bei einem Verfahren zum Kompostieren organischen Materials in wenigstens einer oberseitig mit einer Abdeckung verschlossenen Kompostierzeile, bei dem das organische Material mit wenigstens einem rotierenden Umsetzwerkzeug durchfahren wird, ist vorgesehen, die Abdeckung in wenigstens einem Teilbereich zu öffnen, den geöffneten Teilbereich der Abdeckung mit dem Umsetzwerkzeug zu durchfahren, und den durchfahrenen Teilbereich der Abdeckung wieder zu verschließen. Bei einer Anlage zum Kompostieren des organischen Materials mit wenigstens einer Kompostierzeile, wenigstens einer oberseitig an der Kompostierzeile angeordneten Abdeckung und wenigstens einer Fahrspur zum Führen wenigstens einer ein Umsetzwerkzeug tragenden Umsetzmaschine, weist die Abdeckung wenigstens eine dem Umsetzwerkzeug zugeordnete Durchführöffnung auf. Der Durchführöffnung ist wenigstens ein Verschlussteil zugeordnet, welches über wenigstens ein Schiebelager verschieblich an der Durchführöffnung gehalten ist.

## Beschreibung

Die Erfindung betrifft ein Verfahren zum Kompostieren organischen Materials in wenigstens einer oberseitig mit einer Abdeckung verschlossenen Kompostierzeile, bei dem das organische Material mit wenigstens einem rotierenden Umsetzwerkzeug durchfahren wird. Außerdem betrifft die Erfindung eine Anlage zum Kompostieren organischen Materials mit wenigstens einer Kompostierzeile, wenigstens einer oberseitig an der Kompostierzeile angeordneten Abdeckung und wenigstens einer Fahrspur zum Führen wenigstens einer ein Umsetzwerkzeug tragenden Umsetzmaschine.

Zum Durchfahren des organischen Materials mit dem Umsetzwerkzeug weisen bekannte Anlagen in ihrer Abdeckung eine Schlitzöffnung auf, in der ein das rotierende Umsetzwerkzeug tragender Werkzeugträger seitlich eingeführt oder herausgeführt werden kann. Dazu weisen die bekannten Anlagen die Kompostierzeile stirnseitig begrenzende Flügeltore auf. Die Flügeltore haben jedoch den Nachteil, dass sie einem unmittelbaren Kontakt mit dem organischen Material ausgesetzt sind und ein störungsfreies Schließen der Flügeltore nur bei fortwährender Reinigung und Wartung der den Flügeltoren zugeordneten Dicht-, Anschlags- und Führungsflächen gewährleistet ist.

Der Erfindung liegt deshalb die Aufgabe zugrunde, ein Verfahren und eine Anlage der eingangs genannten Gattung aufzuzeigen, mit denen der Reinigungs- und Wartungsaufwand maßgeblich herabgesetzt ist.

Diese Aufgabe ist erfindungsgemäß mit einem Verfahren mit den Merkmalen des Patentanspruches 1 sowie mit einer Anlage mit den Merkmalen des

Patentanspruches 5 gelöst. Vorteilhafte Weiterbildungen der Erfindung sind in den jeweils auf diese Patentansprüche rückbezogenen Unteransprüchen angegeben.

Das erfindungsgemäße Verfahren zeichnet sich dadurch aus, dass die Abdeckung in wenigstens einem Teilbereich geöffnet wird, dass mit dem Umsetzwerkzeug der geöffnete Teilbereich der Abdeckung durchfahren wird, und dass der durchfahrene Teilbereich der Abdeckung wieder verschlossen wird. Um die Verrottungsprozesse beeinträchtigende Störgrößen so klein wie möglich zu halten, wird die Abdeckung erst unmittelbar vor dem Durchfahren des Teilbereiches mit dem Umsetzwerkzeug geöffnet und bereits unmittelbar nach dem Durchfahren dieses Teilbereiches wieder verschlossen. Das Durchfahren erfolgt zügig, so dass die Zeit, in der die Abdeckung geöffnet ist, möglichst kurz ist. Es versteht sich von selbst, dass die Kompostierzeile nur so weit mit organischem Material befüllt werden sollte, dass die Abdeckung einen Abstand zur maximalen Schütthöhe des organischen Materials aufweist. Der Abstand verhindert eine Verunreinigung der im Bereich der Abdeckung liegenden Anschlags- und Führungsflächen mit dem organischen Material, so dass sich der Reinigungs- und Wartungsaufwand deutlich verringert.

Nach einer ersten Weiterbildung des erfindungsgemäßen Verfahrens wird das den geöffneten Teilbereich der Abdeckung durchfahrende Umsetzwerkzeug aus einem bestimmten Bereich der Kompostierzeile herausbewegt. Die dabei vom Umsetzwerkzeug ausgeführte Bewegung erfolgt vorzugsweise hydraulisch und auf einer Kreisbahn, so dass zum Herausbewegen des Umsetzwerkzeuges erforderliche Stellkräfte minimal klein sind.

Nach einer nächsten Weiterbildung der Erfindung wird der vom Umsetzwerkzeug verlassene Bereich der Kompostierzeile durch den geöffneten Teilbereich der Abdeckung hindurch mit organischem Material aufgefüllt. Dabei entspricht die aufzufüllende Menge organischen Materials vorzugsweise etwa der vom Umsetzwerkzeug in der Schüttung des organischen Materials hinterlassenen Vertiefung.

Um dem Umsetzwerkzeug den für den Umsetzprozess benötigten Arbeitsraum zur Verfügung stellen zu können, ist nach einer anderen Weiterbildung der Erfindung vorgesehen, dass die Kompostierzeile an einer ihrer Stirnseiten geöffnet wird, dass das Umsetzwerkzeug in Rotation versetzt wird, und dass das rotierende Umsetzwerkzeug über die geöffnete Stirnseite in die Kompostierzeile hineingefahren wird. Auf diese Weise wird mit dem Umsetzwerkzeug eine begrenzte Menge organischen Materials über die geöffnete Stirnseite aus der Kompostierzeile herausbefördert. Die herausbeförderte Menge organischen Materials steht als fertiger Kompost zum Abtransport zur Verfügung. Ein konstanter Durchsatz ist dann erreicht, wenn die Menge des aus der Kompostierzeile herausbeförderten organischen Materials etwa derjenigen Menge organischen Materials entspricht, mit der der vom Umsetzwerkzeug verlassene Bereich der Kompostierzeile zu einem nachfolgenden Zeitpunkt wieder aufgefüllt wird.

Die erfindungsgemäße Anlage zum Kompostieren des organischen Materials zeichnet sich dadurch aus, dass die Abdeckung wenigstens eine dem Umsetzwerkzeug zugeordnete Durchführöffnung aufweist und dass der Durchführöffnung wenigstens ein Verschlussteil zugeordnet ist. Um die Verrottungsprozesse beeinträchtigende Störgrößen so klein wie möglich zu halten, ist der Öffnungsquerschnitt der Durchführöffnung lediglich um ein Mindestmaß größer als der Grundriss des Umsetzwerkzeuges. Die in der Abdeckung gelegene Durchführöffnung hat den Vorteil, dass dem Verschlussteil zugeordnete Dicht-, Führungs- oder Anschlagsflächen deutlich oberhalb der maximalen Schütthöhe des organischen Materials liegen und so nicht oder zumindest kaum noch mit dem organischen Material in Berührung kommen. Die Umsetzmaschine ist beispielsweise ein Ketten- oder Radfahrzeug, wobei die Fahrspur entweder von den Wandungen der Kompostierzeile selbst oder von auf den Wandungen montierten Schienen ausgebildet ist.

Nach einer ersten Weiterbildung der erfindungsgemäßen Anlage ist das Verschlussteil über wenigstens ein Schiebelager verschieblich an der Durchführöffnung gehalten. Mit dem Schiebelager besteht bei einem plattenförmig ausgebildeten Verschlussteil die Möglichkeit, den zum Verschließen der Durchführöffnung erforderlichen Bewegungsraum durch eine in der Plattenebene verlaufende Schiebebewegung des Verschlussteiles minimal klein zu halten. Das Schiebelager weist der Durchführöffnung zugeordnete Führungen auf, die entweder an der Kompostierzeile oder ihrer Abdeckung ausgebildet sind.

Nach einer besonders zweckmäßigen Weiterbildung der Erfindung ist das Verschlussteil aus einzelnen klappbeweglich miteinander verbundenen Leitblechen zusammengesetzt. Ein derart ausgebildetes Verschlussteil bietet die Möglichkeit, an der Durchführöffnung eine Art Trichter aufzubauen, durch welchen hindurch die Kompostierzeile besonders sauber mit organischem Material befüllt oder nachgefüllt werden kann.

Vorzugsweise weist die erfindungsgemäße Anlage mehrere parallel zueinander verlaufende Kompostierzeilen auf, wobei die den einzelnen Kompostierzeilen zugeordneten Fahrspuren über wenigstens ein Stellwerk miteinander verbunden sind. Das Stellwerk erlaubt den wahlweisen Spurwechsel der Umsetzmaschine aus der Fahrspur einer Kompostierzeile heraus in die Fahrspur einer anderen Kompostierzeile hinein. Dazu weist das Stellwerk einen quer zur Längsrichtung der Kompostierzeilen verfahrbaren Transferwagen auf. Der Transferwagen weist einen zum Abstellen der Umsetzmaschine ausgebildeten Spurabschnitt auf, der durch Verfahren des Transferwagens vor die Fahrspur einer beliebigen Kompostierzeile in eine Anschlussstellung bewegbar ist. In der Anschlussstellung ist die Umsetzmaschine aus dem Spurabschnitt des Transferwagens heraus in die der Anschlussstellung zugeordnete Fahrspur hinein und wieder zurück bewegbar.

Nach einer nächsten Weiterbildung der Erfindung weisen die den einzelnen Kompostierzeilen zugeordneten Schiebelager wenigstens einen am Stellwerk ausgebildeten Führungsabschnitt auf. Der vorzugsweise zwischen den Spuren des Spurabschnittes angeordnete Führungsabschnitt ist ebenfalls durch das Verfahren des Transferwagens vor die Führungen einer beliebigen Durchtrittsöffnung in eine Anschlussstellung bewegbar, so dass das der Durchtrittsöffnung zugeordnete Verschlussteil aus seiner Kompostierzeile heraus in das Stellwerk hinein und wieder zurück bewegbar ist. Zum automatischen Öffnen und Schließen der Durchtrittsöffnung weist die Umsetzmaschine einen mit dem Verschlussteil zusammenwirkenden Mitnehmer auf.

Um der Kompostierzeile organisches Material auf besonders effiziente Art und Weise entnehmen zu können, weist die Kompostierzeile an wenigstens einer ihrer Stirnseiten eine dem Umsetzwerkzeug zugeordnete Durchführöffnung auf. Der Öffnungsquerschnitt der Durchführöffnung entspricht vorzugsweise dem Öffnungsquerschnitt der Kompostierzeile, so dass das organische Material mit dem rotierenden Umsetzwerkzeug über die geöffnete Stirnseite ungehindert aus der Kompostierzeile herausbefördert werden kann.

Ein Ausführungsbeispiel der Erfindung, aus dem sich weitere erfinderische Merkmale ergeben, ist in den Zeichnungen dargestellt. Es zeigen:
- Fig. 1:: eine erfindungsgemäße Anlage beim Durchfahren des in einer Kompostierzeile aufgenommenen organischen Materials mit einem rotierenden Umsetzwerkzeug in einer anfänglichen Arbeitsstellung;
- Fig. 2:: die Anlage gemäß Fig. 1 beim Durchfahren des organischen Materials mit dem rotierenden Umsetzwerkzeug in einer fortgeschrittenen Arbeitsstellung;
- Fig. 3:: die Anlage gemäß der Figuren 1 und 2 unmittelbar nach dem Durchfahren des organischen Materials mit dem Umsetzwerkzeug;

- Fig. 4:: die Anlage gemäß der Figuren 1 bis 3 nach dem Öffnen einer in einer Abdeckung der Kompostierzeile angeordneten Durchführöffnung;
- Fig. 5:: die Anlage gemäß der Figuren 1 bis 4, beim Herausbewegen des Umsetzwerkzeuges aus einem bestimmten Bereich der Kompostierzeile;
- Fig. 6:: die Anlage gemäß der Figuren 1 bis 5 nach dem Durchfahren der geöffneten Durchführöffnung mit dem Umsetzwerkzeug;
- Fig, 7:: die Anlage gemäß der Figuren 1 bis 6 nach dem Verschließen der mit dem Umsetzwerkzeug durchfahrenen Durchführöffnung;
- Fig. 8:: die Anlage gemäß der Figuren 1 bis 7 nach dem Verfahren des Umsetzwerkzeuges vor eine andere Kompostierzeile;
- Fig. 9:: die Anlage gemäß der Figuren 1 bis 8 nach dem Öffnen der in der Abdeckung angeordneten Durchführöffnung;
- Fig. 10:: die Anlage gemäß der Figuren 1 bis 9 unmittelbar vor dem Auffüllen des vom Umsetzwerkzeug in der Kompostierzeile verlassenen Bereiches; und
- Fig. 11:: die Anlage gemäß der Figuren 1 bis 10 beim Auffüllen des vom Umsetzwerkzeug in der Kompostierzeile verlassenen Bereiches.

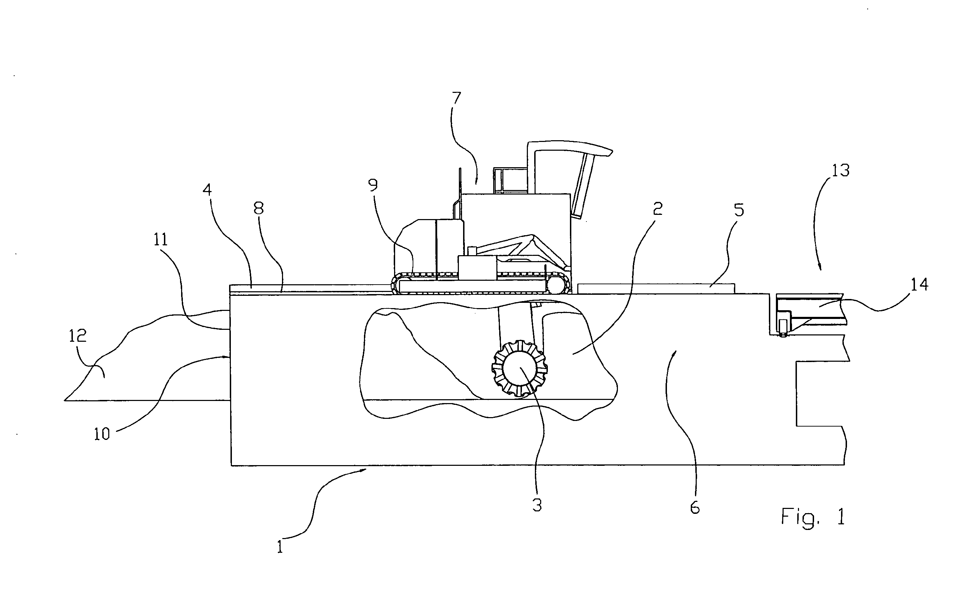

Die Fig. 1 zeigt die erfindungsgemäße Anlage beim Durchfahren des in einer Kompostierzeile 1 aufgenommenen organischen Materials 2 mit einem rotierenden Umsetzwerkzeug 3 in einer anfänglichen Arbeitsstellung. Die Kompostierzeile 1 weist eine Abdeckung 4 auf, in welcher eine mit einem Verschlussteil 5 verschlossene Durchführöffnung 6 für das Umsetzwerkzeug 3 angeordnet ist. Zum Führen einer das Umsetzwerkzeug 3 rotatorisch antreibenden Umsetzmaschine 7 weist die Anlage eine Fahrspur 8 auf, in der die Umsetzmaschine 7 mit zwei Laufketten 9 gehalten ist. Weiterhin weist die Kompostierzeile 1 für das Umsetzwerkzeug 3 eine weitere Durchführöffnung 10 auf, die an einer Stirnseite 11 der Kompostierzeile 1 ausgebildet ist. In der anfänglichen Arbeitsstellung wird mit dem Umsetzwerkzeug 3 eine begrenzte Menge organischen Materials 12 über die geöffnete Stirnseite 11 aus der Kompostierzeile 1 herausbefördert. Das in dieser Figur dargestellte Ausführungsbeispiel weist mehrere parallel zueinander verlaufende Kompostierzeilen auf, wobei die den einzelnen Kompostierzeilen zugeordneten Fahrspuren über ein Stellwerk 13 miteinander verbunden sind. Das Stellwerk 13 weist einen Transferwagen 14 zur Aufnahme der Umsetzmaschine 7 auf. Mit dem Transferwagen 14 ist die Umsetzmaschine 7 aus der Fahrspur 8 der Kompostierzeile 1 heraus und in die Fahrspur einer anderen Kompostierzeile hinein bewegbar.

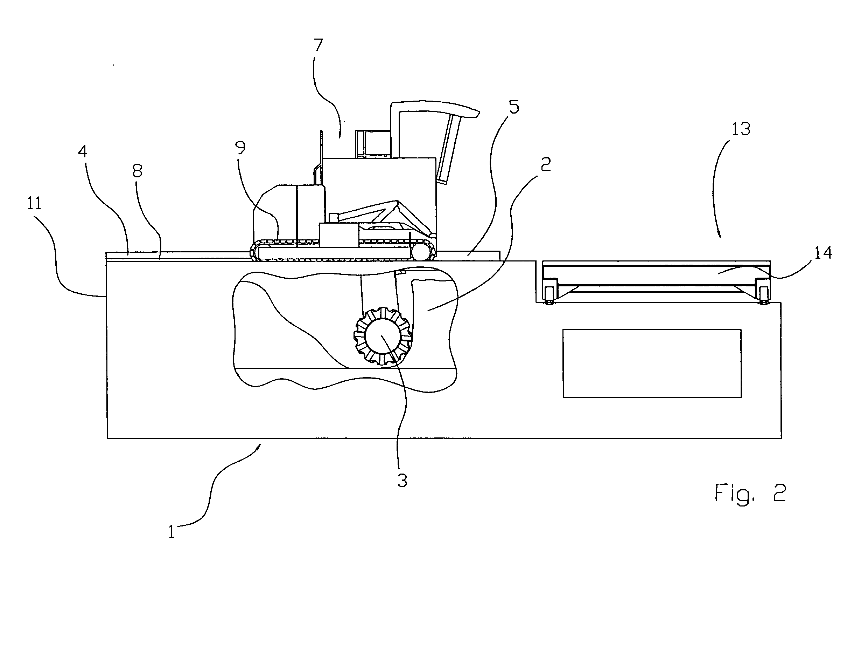

Die Fig. 2 zeigt die Anlage gemäß Fig. 1 beim Durchfahren des organischen Materials 2 mit dem rotierenden Umsetzwerkzeug 3 in einer fortgeschrittenen Arbeitsstellung. Die Umsetzmaschine 7 bewegt sich dabei in Richtung des Transferwagens 14. Das über die geöffnete Stirnseite 11 aus der Kompostierzeile 1 herausbeförderte organische Material 12 (siehe Fig. 1) ist bereits abtransportiert worden. Gleiche Bauteile sind mit gleichen Bezugszahlen versehen.

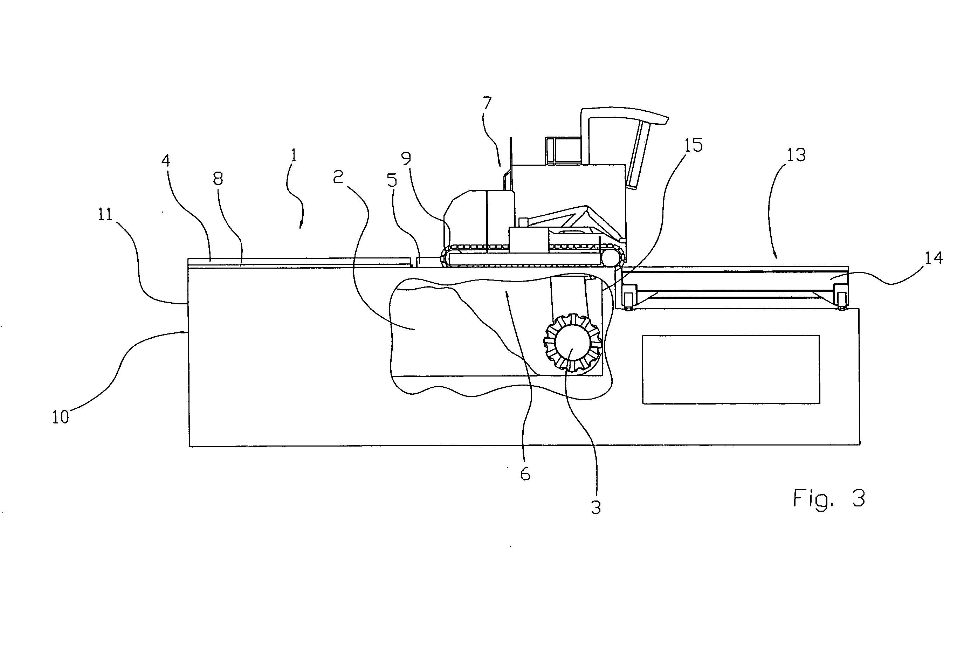

Die Fig. 3 zeigt die Anlage gemäß der Fig. 1 und 2 unmittelbar nach dem Durchfahren des organischen Materials 2 mit dem Umsetzwerkzeug 3. In dieser Arbeitsstellung ist das Umsetzwerkzeug 3 an der der Durchführöffnung 10 abgelegenen Stirnseite 15 der Kompostierzeile 1 angelangt. Die Umsetzmaschine 7 steht unmittelbar über der in der Abdeckung 4 angeordneten Durchführöffnung 6. Gleiche Bauteile sind mit gleichen Bezugszahlen versehen.

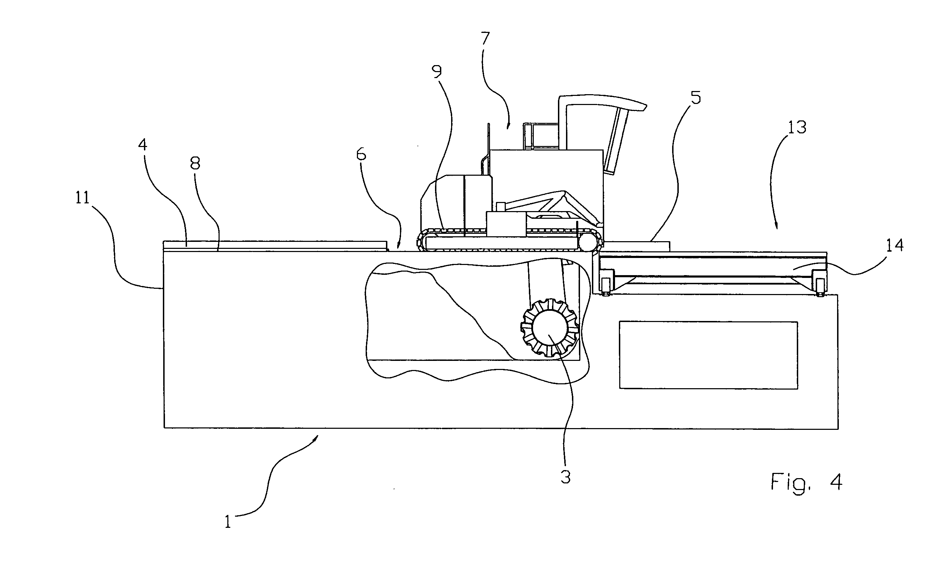

Die Fig. 4 zeigt die Anlage gemäß der Fig. 1 bis 3 nach dem Öffnen einer in der Abdeckung 4 der Kompostierzeile 1 angeordneten Durchführöffnung 6. Zum Öffnen der Durchführöffnung 6 wurde das verschieblich an der Abdeckung 4 gehaltene Verschlussteil 5 von der Umsetzmaschine 7 ein Stück weit über den Transferwagen 14 bewegt.

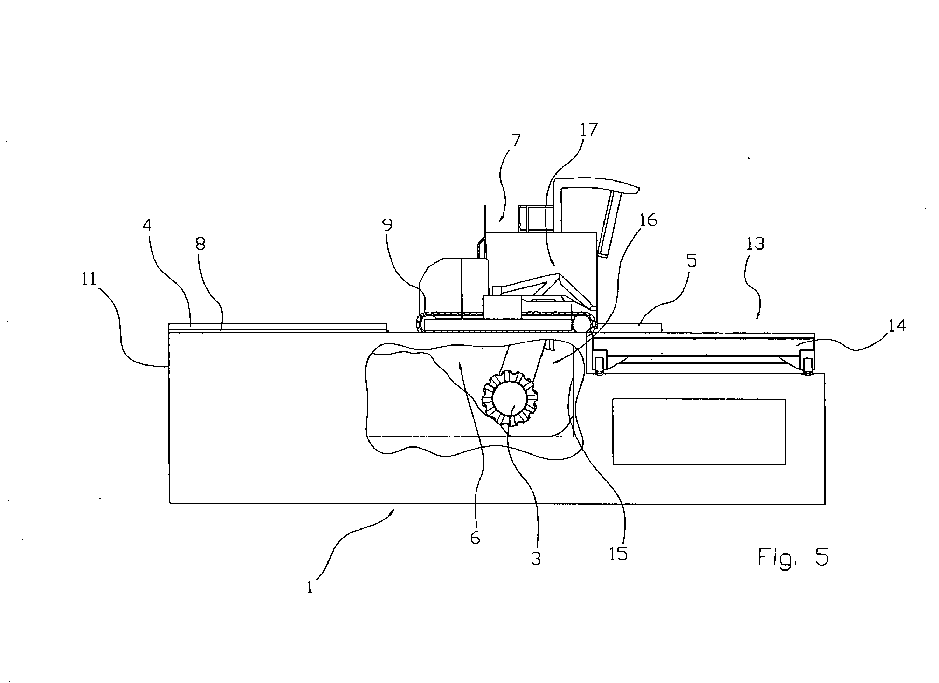

Die Fig. 5 zeigt die Anlage gemäß der Fig. 1 bis 4 beim Herausbewegen des Umsetzwerkzeuges 3 aus einem bestimmten Bereich 16 der Kompostierzeile 1. Dazu ist das Umsetzwerkzeug 3 über eine Hydraulik 17 schwenkbeweglich in der Umsetzmaschine 7 gehalten. Die vom Umsetzwerkzeug 3 ausgeführte Schwenkbewegung erfolgt mit einem Drehsinn in Uhrzeigerrichtung.

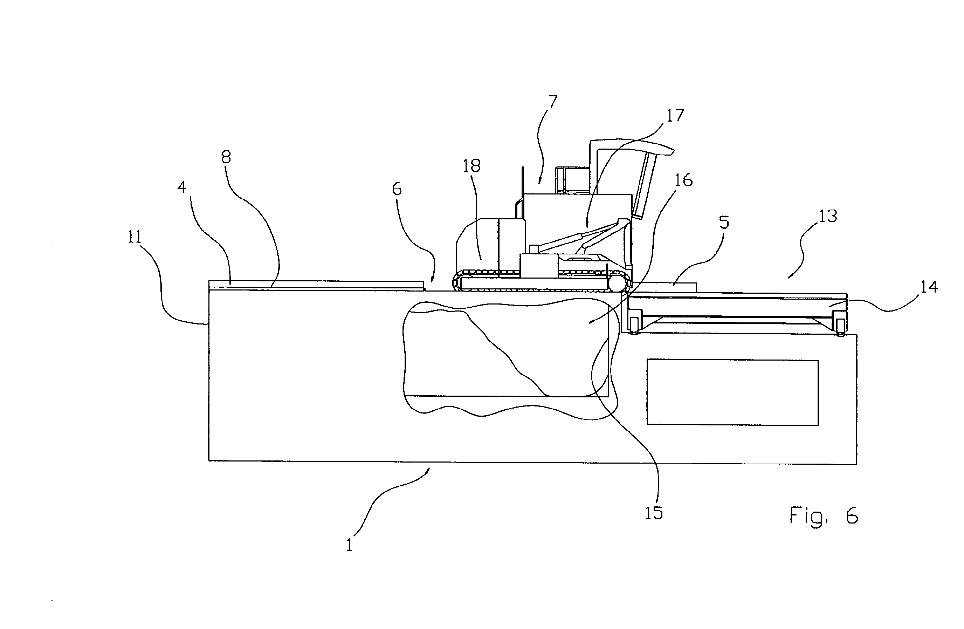

Die Fig. 6 zeigt die Anlage gemäß der Fig. 1 bis 5 nach dem Durchfahren der geöffneten Durchführöffnung 6 mit dem Umsetzwerkzeug 3 (siehe Fig. 1 bis 5). Dazu wurde das Umsetzwerkzeug von der Hydraulik 17 vollständig in ein Maschinengehäuse 18 der Umsetzmaschine 7 eingefahren. Die in der Abdeckung 4 gelegene Durchführöffnung 6 ist noch geöffnet.

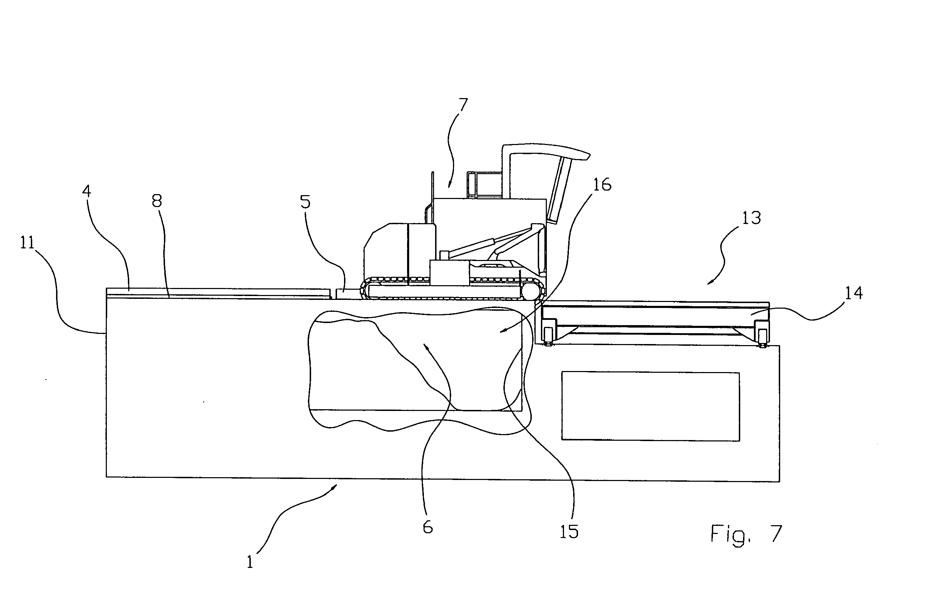

Die Fig. 7 zeigt die Anlage gemäß der Fig. 1 bis 6 nach dem Verschließen der mit dem Umsetzwerkzeug 3 durchfahrenen Durchführöffnung 6. Zum Verschließen der Durchführöffnung 6 wurde das verschieblich an der Abdeckung 4 gehaltene Verschlussteil 5 von der Umsetzmaschine 7 in Richtung der Stirnseite 11 der Kompostierzeile 1 zurückbewegt.

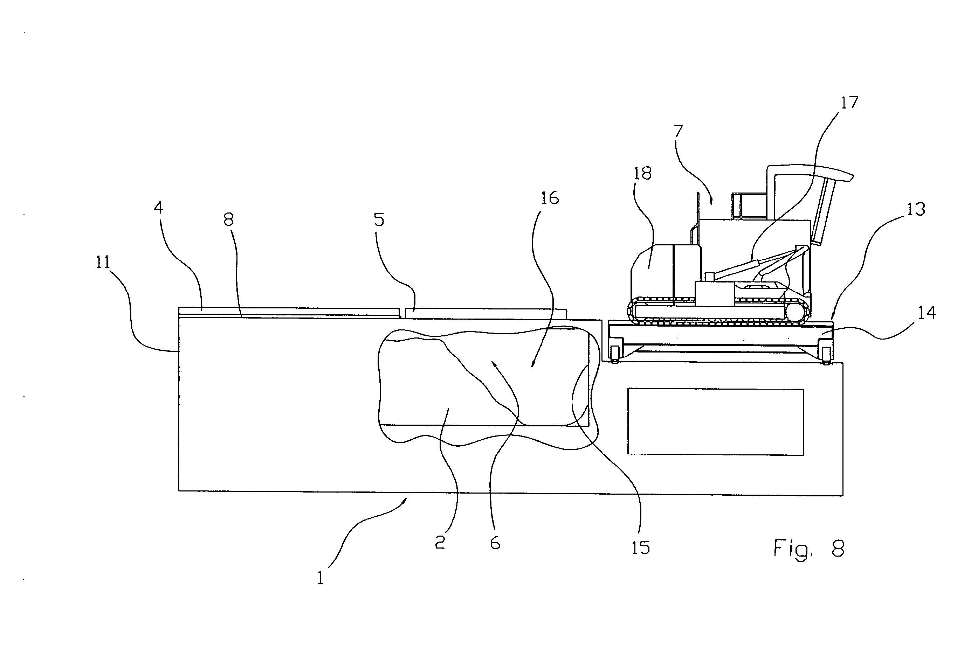

Die Fig. 8 zeigt die Anlage gemäß der Fig. 1 bis 7 nach dem Verfahren des in dem Maschinengehäuse 18 aufgenommenen Umsetzwerkzeuges vor eine andere Kompostierzeile. Dazu wurde die Umsetzmaschine 7 in einem ersten Schritt auf den Transferwagen 14 des Stellwerkes 13 verfahren. In einem zweiten Schritt wurde der Transferwagen 14 aus der Fahrspur 8 der Kompostierzeile 1 heraus in die Fahrspur einer anderen Kompostierzeile hineinbewegt. Die in der Abdeckung 4 gelegene Durchführöffnung 6 bleibt zunächst einmal mit dem Verschlussteil 5 verschlossen. Gleiche Bauteile sind mit gleichen Bezugszahlen versehen.

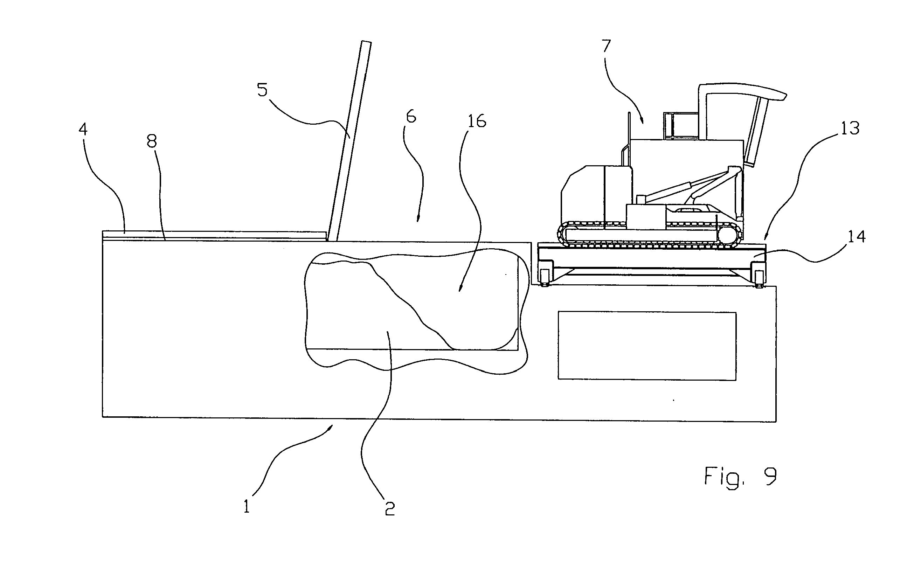

Die Fig. 9 zeigt die Anlage gemäß der Fig. 1 bis 8 nach dem Öffnen der in der Abdeckung 4 angeordneten Durchführöffnung 6. Um die Durchführöffnung 6 in der dargestellten Arbeitsposition öffnen zu können, sind das Verschlussteil 5 und die Abdeckung 4 auch drehbeweglich miteinander verbunden.

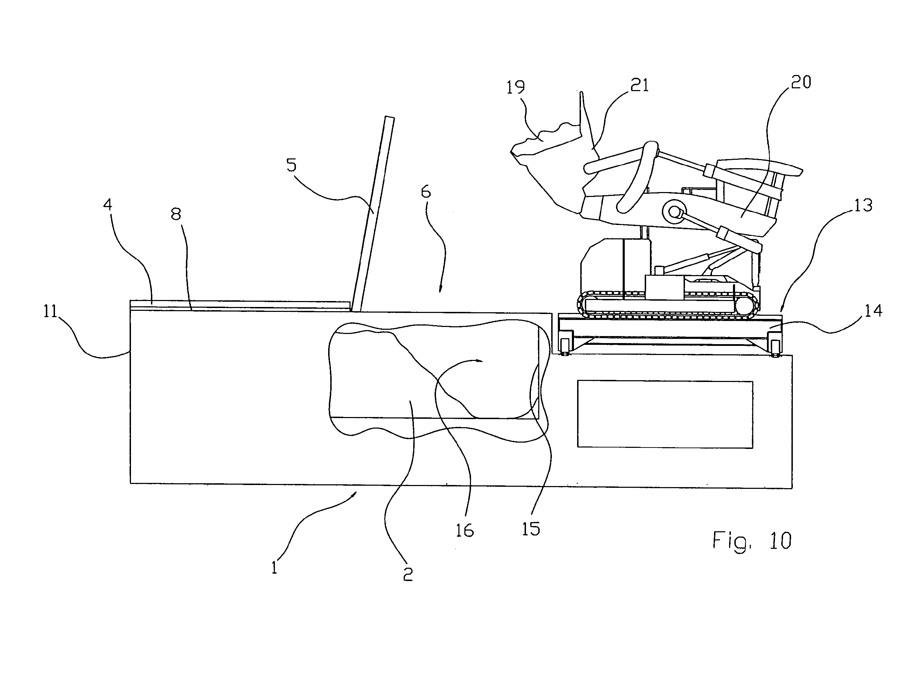

Die Fig. 10 zeigt die Anlage gemäß der Fig. 1 bis 9 unmittelbar vor dem Auffüllen des vom Umsetzwerkzeug 3 (siehe Fig. 1 bis 5) in der Kompostierzeile 1 verlassenen Bereiches 16. Dazu wird unkompostiertes organisches Material 19 in einer an einem Gelenkarm 20 bewegten Schaufel 21 an die Durchführöffnung 6 der Kompostierzeile 1 herangefahren.

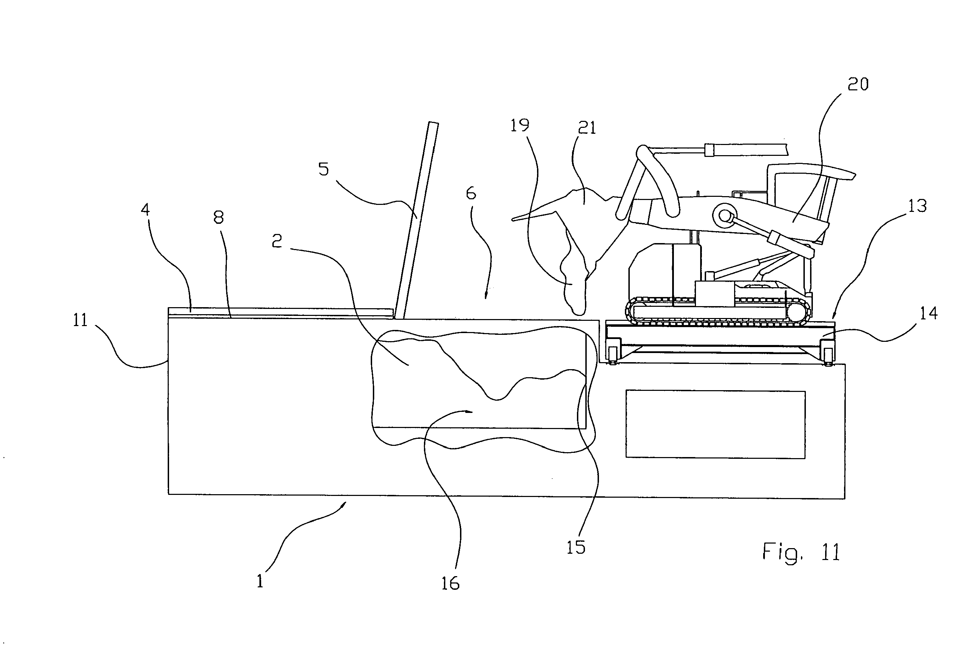

Die Fig. 11 zeigt die Anlage gemäß der Fig. 1 bis 10 beim Auffüllen des vom Umsetzwerkzeug 3 (siehe Fig. 1 bis 5) in der Kompostierzeile 1 verlassenen Bereiches 16. Dazu wird das in der Schaufel 21 an die Durchführöffnung 6 herangefahrene organische Material 19 durch die Durchführöffnung 6 hindurch in den Bereich 16 hineingeschüttet. Unmittelbar nach dem Auffüllen des Bereiches 16 wird die in der Abdeckung 4 gelegene Durchführöffnung 6 durch Herabschwenken des Verschlussteiles 5 wieder verschlossen.

## Patentansprüche

1. Verfahren zum Kompostieren organischen Materials in wenigstens einer oberseitig mit einer Abdeckung verschlossenen Kompostierzeile, bei dem das organische Material mit wenigstens einem rotierenden Umsetzwerkzeug durchfahren wird,
**dadurch gekennzeichnet,**
**dass** die Abdeckung in wenigstens einem Teilbereich geöffnet wird,
**dass** mit dem Umsetzwerkzeug (3) der geöffnete Teilbereich der Abdeckung (4) durchfahren wird, und
**dass** der durchfahrene Teilbereich der Abdeckung (4) wieder verschlossen wird.

2. Verfahren nach Anspruch 1, **dadurch gekennzeichnet, dass** das den geöffneten Teilbereich der Abdeckung (4) durchfahrende Umsetzwerkzeug (3) aus einem bestimmten Bereich (16) der Kompostierzeile (1) herausbewegt wird.

3. Verfahren nach Anspruch 2, **dadurch gekennzeichnet, dass** der vom Umsetzwerkzeug (3) verlassene Bereich (16) der Kompostierzeile (1) durch den geöffneten Teilbereich der Abdeckung (4) hindurch mit organischem Material (19) aufgefüllt wird.

4. Verfahren nach einem der Ansprüche 1 bis 3, **dadurch gekennzeichnet, dass** die Kompostierzeile (1) an einer ihrer Stirnseiten (11, 15) geöffnet wird, dass das Umsetzwerkzeug (3) in Rotation versetzt wird, und dass das rotierende Umsetzwerkzeug (3) über die geöffnete Stirnseite (11) der Kompostierzeile (1) in das organische Material (2) hinein gefahren wird.

5. Anlage zum Kompostieren organischen Materials mit wenigstens einer Kompostierzeile, wenigstens einer oberseitig an der Kompostierzeile angeordneten Abdeckung und wenigstens einer Fahrspur zum Führen wenigstens einer ein Umsetzwerkzeug tragenden Umsetzmaschine, insbesondere zur Durchführung des Verfahrens nach einem der Ansprüche 1 bis 4,
**dadurch gekennzeichnet,**
**dass** die Abdeckung (4) wenigstens eine dem Umsetzwerkzeug (3) zugeordnete Durchführöffnung (6) aufweist, und
**dass** der Durchführöffnung (6) wenigstens ein Verschlussteil (5) zugeordnet ist.

6. Anlage nach Anspruch 5, **dadurch gekennzeichnet, dass** das Verschlussteil (5) über wenigstens ein Schiebelager verschieblich an der Durchführöffnung (6) gehalten ist.

7. Anlage nach Anspruch 5 oder 6, **dadurch gekennzeichnet, dass** das Verschlussteil (5) aus einzelnen klappbeweglich miteinander verbundenen Leitblechen zusammengesetzt ist.

8. Anlage nach einem der Ansprüche 5 bis 7, **dadurch gekennzeichnet, dass** sie mehrere parallel zueinander verlaufende Kompostierzeilen (1) aufweist, und dass die den einzelnen Kompostierzeilen (1) zugeordneten Fahrspuren (8) über wenigstens ein Stellwerk (13) miteinander verbunden sind.

9. Anlage nach Anspruch 8, **dadurch gekennzeichnet, dass** die den einzelnen Kompostierzeilen (1) zugeordneten Schiebelager wenigstens einen am Stellwerk (13) ausgebildeten Führungsabschnitt aufweisen.

10. Anlage nach einem der Ansprüche 5 bis 9, **dadurch gekennzeichnet, dass** die Kompostierzeile (1) an wenigstens einer ihrer Stirnseiten (11, 15) eine dem Umsetzwerkzeug (3) zugeordnete Durchführöffnung (6) aufweist.
